(19) Europäisches Patentamt
European Patent Office
Office européen des brevets

(11) **EP 3 121 489 B1**

(12) **EUROPÄISCHE PATENTSCHRIFT**

(45) Veröffentlichungstag und Bekanntmachung des Hinweises auf die Patenterteilung:
**30.09.2020  Patentblatt 2020/40**

(21) Anmeldenummer: **16001403.1**

(22) Anmeldetag: **22.06.2016**

(51) Int Cl.:
**F16H 61/02** *(2006.01)*

(54) **VERFAHREN UND VORRICHTUNG ZUR BEEINFLUSSUNG EINER GETRIEBESCHALTSTRATEGIE EINES KRAFTFAHRZEUGS**

METHOD AND DEVICE FOR INFLUENCING A TRANSMISSION SHIFT STRATEGY OF A MOTOR VEHICLE

PROCÉDÉ ET DISPOSITIF DE COMMANDE D'UNE STRATÉGIE DE CHANGEMENT DE VITESSE DE TRANSMISSION D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.07.2015   DE 102015009600**

(43) Veröffentlichungstag der Anmeldung:
**25.01.2017   Patentblatt 2017/04**

(73) Patentinhaber: **MAN Truck & Bus SE
80995 München (DE)**

(72) Erfinder:
• **Weller, Ralf
  80638 München (DE)**
• **Kraus, Sven
  82140 Olching (DE)**

(74) Vertreter: **v. Bezold & Partner Patentanwälte - PartG mbB
Akademiestraße 7
80799 München (DE)**

(56) Entgegenhaltungen:
**WO-A1-2014/003653     DE-A1-102010 041 324**

**Beschreibung**

Die Erfindung betrifft ein Verfahren zur Beeinflussung einer Getriebeschaltstrategie eines Kraftfahrzeugs, beispielsweise eines Nutzfahrzeugs. Die Erfindung betrifft insbesondere ein derartiges Verfahren, bei dem für eine vorausschauende Fahrstrategie eine Schaltreaktion, insbesondere ein Soll-Gang, auf einem vorausliegenden Streckenabschnitt in Abhängigkeit von Topographiedaten des vorausliegenden Streckenabschnitts bestimmt wird. Die Erfindung betrifft ferner eine Steuervorrichtung eines automatischen bzw. automatisierten Schaltgetriebes, die eingerichtet ist, für eine vorausschauende Fahrstrategie eine Schaltreaktion, insbesondere einen Soll-Gang, auf einem vorausliegenden Streckenabschnitt in Abhängigkeit von Topographiedaten des vorausliegenden Streckenabschnitts zu bestimmen.

Derartige Ansätze sind bereits aus dem Stand der Technik bekannt. So offenbart die DE 10 2006 001 818 A1 eine Getriebesteuerungseinrichtung, die eine dem Kraftfahrzeug vorausliegende Topographie einer Fahrroute rechnergestützt auswertet, um z. B. einen Gangwechsel zu bestimmen. Ein entsprechendes Verfahren ist ebenfalls aus der US 2010/0030437 A1 bekannt, bei dem aus topographischen Streckendaten ein Straßengradientenfaktor für vorausliegende Streckenabschnitte bestimmt wird, der in die Schaltstrategie einfließt.

Ferner offenbart die DE 10 2009 002 387 A1 eine Getriebesteuerungseinrichtung eines automatischen bzw. automatisierten Schaltgetriebes, die auf Basis von Topographiedaten einer aktuellen Position des Kraftfahrzeugs die Fahrzustandsdaten Fahrzeugmasse und/oder Fahrwiderstand und/oder Fahrzeugneigung fortlaufend aktuell berechnet und/oder die Schaltstrategie bestimmt auf Basis von Topographiedaten, die in einem definierten Abstand von einer aktuellen Position des Kraftfahrzeugs liegen, einen Gangwechsel von einem Ist-Gang in einen Soll-Gang, wobei der definierte Abstand vor dem Kraftfahrzeug abhängig von der Fahrzeuggeschwindigkeit ist.

Aus der Offenlegungsschrift DE 10 2011 080 712 A1 ist ein Verfahren zur Beeinflussung einer Getriebeschaltstrategie eines Kraftfahrzeugs, beispielsweise eines Nutzfahrzeugs, bekannt, bei dem für eine vorausschauende Fahrstrategie, die auf Topographiedaten einer aktuellen Position des Kraftfahrzeugs und/oder auf Topographiedaten einer in einer bestimmten Entfernung vor der aktuellen Position des Kraftfahrzeugs liegenden Position basiert, eine Schaltreaktion bestimmt wird. Insbesondere wird vorgeschlagen, dass straßenklassenbezogene Informationen und/oder zeitliche straßenverkehrsregelnde Informationen und/oder als wahrscheinlich angenommene routenbezogene Informationen erfasst werden und dass solche erfassten Informationen oder daraus abgeleiteten schaltstrategierelevanten Informationen für die Bestimmung einer Schaltreaktion bei einer Auswertung der Topographiedaten berücksichtigt werden.

Die EP 2 439 428 A1 offenbart ein Verfahren zur Schaltsteuerung eines automatisierten Stufenschaltgetriebes, wobei während der Fahrt neben aktuellen fahrzeug-, fahrbahn- und fahrerspezifischen Betriebsparametern auch auf einen dem Kraftfahrzeug vorausliegenden Streckenabschnitt bezogene topographische Daten, insbesondere das Höhenprofil, ermittelt werden und daraus im Automatikmodus des Stufenschaltgetriebes ein optimaler Soll-Gangverlauf des Stufenschaltgetriebes für den vorausliegenden Streckenabschnitt bestimmt wird. Insbesondere wird vorgeschlagen, mehrere nach unterschiedlichen Kriterien optimierte Soll-Gangverläufe zu bestimmen, die jeweils nach mehreren Bewertungskriterien bewertet werden, und dass der am besten bewertete Soll-Gangverlauf als der für den vorausliegenden Streckenabschnitt zu verwendende optimale Soll-Gangverlauf bestimmt wird.

Die DE 10 2005 049 710 A1 betrifft ein Verfahren zur Beeinflussung eines automatisierten Schaltgetriebes eines Kraftfahrzeugs, aufweisend eine Fahrwiderstanderkennungseinrichtung, welche einen externen Fahrwiderstand des Fahrzeugs ermittelt und in Abhängigkeit von diesem externen Fahrwiderstand ein Schaltprogramm des automatisierten Schaltgetriebes durch Aktivierung und/oder Adaptierung und/oder Variierung beeinflusst.

Aus der DE 10 2010 041 324 A1 ist ein Verfahren zur Schaltsteuerung eines automatisierten Stufenschaltgetriebes, das mit einem mit einer Dauerbremse versehenen Antriebsstrang versehen ist, offenbart, wobei während der Fahrt neben aktuellen fahrzeug-, fahrbahn- und fahrerspezifischen Betriebsparametern auch während eines Schubbetriebs auf einen dem Kraftfahrzeug vorausliegenden Streckenabschnitt bezogene topographische Daten ermittelt werden. Daraus wird das Fahrwiderstandsprofil für den vorausliegenden Streckenabschnitt bestimmt und im Automatikmodus des Stufenschaltgetriebes während eines Schubbetriebs Steuerbefehle für Schub-Rückschaltungen und/oder Schub-Hochschaltungen in Abhängigkeit des Fahrwiderstandsprofils abgeleitet. Hierbei ist vorgesehen, dass ausgehend von der aktuellen Fahrgeschwindigkeit im Schubbetrieb der aktuellen Motordrehzahl und im Fahrwiderstandsprofil die Verläufe der maximalen Dauerbremskraft, die in dem vorausliegenden Streckenabschnitt in dem aktuell eingelegten Gang und in dazu benachbarten Gängen jeweils möglich sind, bestimmt werden und dass die Verläufe der maximalen Dauerbremskraft zur Ableitung von Steuerbefehlen für eine Schub-Rückschaltung und/oder Schub-Hochschaltung in Relation zu dem Fahrwiderstand bewertet werden.

Obwohl es aus dem Stand der Technik somit bereits grundsätzlich bekannt ist, dass eine Getriebesteuerungseinrichtung den Betrieb des Getriebes auf Grundlage von Daten über das Umfeld des Kraftfahrzeugs, insbesondere auf Grundlage von Topographiedaten, steuert und/oder regelt, besteht ein weiterer Bedarf daran, den Betrieb eines Getriebes auf Grundlage solcher Daten weiter zu verbessern, insbesondere um während eines Schubbetriebs ein wirksameres und komfortableres Bremsen zu ermöglichen.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zur Beeinflussung einer Getriebeschaltstrategie eines Kraftfahrzeugs, beispielsweise eines Nutzfahrzeugs, bereitgestellt, bei dem für eine vorausschauende Fahrstrategie eine Schaltreaktion, insbesondere eine Soll-Gangstufe, auf einem vorausliegenden Streckenabschnitt in Abhängigkeit von Topographiedaten des vorausliegenden Streckenabschnitts bestimmt wird.

Erfindungsgemäß wird vorgeschlagen, in Abhängigkeit von Topographiedaten des vorausliegenden Streckenabschnitts sowohl einen Verlauf der Hangabtriebskraft für einen prädizierten Schubbetrieb als auch die vom Kraftfahrzeug im Schubbetrieb erzeugbare gangstufenabhängige maximale Gesamtbremskraft jeweils für unterschiedliche Gangstufen des Kraftfahrzeugs prädiktiv zu bestimmen. Eine prädiktive Bestimmung dieser Größen bedeutet, dass die Größen rechnerisch vor deren tatsächlichem Auftreten ermittelt bzw. vorhergesagt werden. Aus denjenigen Gangstufen, die eine ausreichende Kompensation der Hangabtriebskraft im Schubbetrieb ermöglichen, kann anschließend eine geeignete Soll-Gangstufe für den Schubbetrieb ausgewählt werden, um dadurch ein wirksames verschleißfreies Bremsen im Schubbetrieb zu ermöglichen und ein unkomfortables Hin- und Herschalten oder Eingreifen der Betriebsbremse zu vermeiden. Die Begriffe Gangstufe und Gang des Getriebes werden in diesem Dokument gleichbedeutend verwendet.

Hierbei umfasst das Verfahren den Schritt der Vorhersage eines Schubbetriebs auf einem vorausliegenden Streckenabschnitt in Abhängigkeit von Topographiedaten, beispielsweise in Abhängigkeit von einem Höhenprofil bzw. von Steigungs- und Gefälleinformationen, des vorausliegenden Streckenabschnitts. Der Schubbetrieb bezeichnet den Fahrzustand des Kraftfahrzeugs, in dem bei nicht getrenntem Kraftschluss der Motor durch das Fahrzeug geschleppt, also in Drehbewegung gehalten wird. Insbesondere bei einem Nutzfahrzeug ist es aufgrund dessen schwerer Masse zur Kraftstoffeinsparung vorteilhaft, bei längeren Gefällestrecken in einen Schubbetrieb zu wechseln. Ein Schubbetrieb kann in an sich bekannter Weise beispielsweise dadurch vorhergesagt werden, wenn auf dem vorausliegenden Streckenabschnitt eine längere Gefällestrecke erkannt wird. Beispielsweise kann eine Fahrzeugsteuereinrichtung eingerichtet sein, automatisch in einen Schubbetrieb zu wechseln, wenn das Kraftfahrzeug in eine Gefällestrecke einfährt, deren Länge eine vorgegebene Mindestlänge überschreitet und deren durchschnittliches Gefälle größer als ein vorgegebener Mindestwert für den Schubbetrieb ist.

Das Verfahren umfasst den weiteren Schritt der Bestimmung einer Soll-Geschwindigkeit für den vorhergesagten Schubbetrieb. Die Soll-Geschwindigkeit kann insbesondere als eine konstante Soll-Geschwindigkeit für den Schubbetrieb vorgegeben werden, was die Berechnung der Bremskräfte im Schubbetrieb vereinfacht. Diese Soll-Geschwindigkeit wird nachfolgend verwendet, um die im Schubbetrieb erzeugbaren Bremskräfte des Kraftfahrzeugs zu berechnen, zumindest diejenigen Bremskräfte, die unmittelbar oder mittelbar von der Fahrzeuggeschwindigkeit abhängen.

Die Soll-Geschwindigkeit für den Schubbetrieb kann beispielsweise dadurch bestimmt werden, dass diese als die momentane Ist-Geschwindigkeit des Kraftfahrzeugs festgelegt wird. Dieser Variante liegt die Annahme zugrunde, dass der Fahrer die aktuelle Fahrzeuggeschwindigkeit auch im Gefälle konstant halten möchte. Ferner kann die Soll-Geschwindigkeit für den Schubbetrieb als eine momentan eingestellte Soll-Geschwindigkeit einer Fahrerwunschgeschwindigkeitsregelung oder einer Bremsgeschwindigkeitsregelung festgelegt werden, falls die Fahrerwunschgeschwindigkeitsregelung oder Bremsgeschwindigkeitsregelung aktuell aktiviert ist. Eine Fahrerwunschgeschwindigkeitsregelung wird auch als Tempopilot oder Tempomat® bezeichnet. Eine Bremsgeschwindigkeitsregelung, die insbesondere bei Fahrzeugen mit Dauerbremsspreizung zum Einsatz kommt, wird auch als Bremsomat bezeichnet.

Das Verfahren umfasst ferner den Schritt der prädiktiven Bestimmung eines Verlaufs einer während des Schubbetriebs und/oder auf dem vorausliegendem Streckenabschnitt auf das Kraftfahrzeug wirkenden Hangabtriebskraft. Der Verlauf der Hangabtriebskraft ergibt sich in bekannter Weise aus dem Verlauf des Neigungswinkels der Gefällestrecke und der Gewichtskraft des Kraftfahrzeugs. Der Verlauf der Hangabtriebskraft gibt somit die Höhe der Bremskraft an, die vom Kraftfahrzeug im Schubbetrieb aufgebracht werden muss, um die Soll-Geschwindigkeit zu halten.

Das Verfahren umfasst ferner den Schritt, dass für jede im Schubbetrieb einlegbare Gangstufe eine vom Kraftfahrzeug im Schubbetrieb erzeugbare Gesamtbremskraft, insbesondere die maximal erzeugbare Gesamtbremskraft, prädiktiv bestimmt wird. Hierbei wird die Annahme getroffen, dass sich das Kraftfahrzeug im Schubbetrieb mit der bestimmten Soll-Geschwindigkeit bewegen wird und dass eine durch eine Betriebsbremse erzielbare Bremskraft nicht berücksichtigt wird, so dass als Bremskräfte nur Bremskräfte, die ein verschleißfreies oder im Wesentlichen verschleißfreies Dauerbremsen ermöglichen, berücksichtigt werden. Wenn nicht explizit anders angegeben, wird unter einer Bremskraft in diesem Dokument somit eine solche Bremskraft, die ein verschleißfreies oder im Wesentlichen verschleißfreies Dauerbremsen ermöglicht, verstanden. Diese vom Kraftfahrzeug im Schubbetrieb erzeugbare Gesamtbremskraft setzt sich zusammen aus einem gangunabhängigen Bremskraftanteil, beispielsweise basierend auf der geschwindigkeitsabhängigen Luftwiderstandskraft und der Rollwiderstandskraft des Fahrzeugs, und einem gangabhängigen Bremskraftanteil, in den beispielsweise die aus dem Motorschleppmoment resultierende Motorbremswirkung eingeht.

Das Verfahren umfasst ferner den Schritt der Bestimmung einer Vorauswahl möglicher Gangstufen für den Schubbetrieb. Hierbei wird eine Gangstufe, für die vorausberechnet wurde, dass ihre im Schubbetrieb bzw. auf der vorausliegenden Gefällestrecke maximal erzeugbare Gesamtbremskraft größer als ein Maximum des prädiktiv bestimmten Verlaufs der Hangabtriebskraft auf dieser Gefällestrecke ist, zur Vorauswahl hinzugefügt. Wenn somit berechnet wird, dass die relevante maximal erzeugbare Gesamtbremskraft in einem bestimmten Gang X immer größer als die Hangabtriebskraft während des vorhergesagten Schubbetriebs ist, so ist dieser Gang X prinzipiell für den Bremsvorgang geeignet, da die durch die Hangabtriebskraft erzeugte Beschleunigung des Kraftfahrzeugs allein durch die Gesamtbremskraft des Fahrzeugs kompensiert werden kann, ohne dass zusätzlich eine Betriebsbremse betätigt werden müsste. Schließlich kann gemäß dem Verfahren aus der bestimmten Vorauswahl möglicher Gangstufen eine Gangstufe als Soll-Gangstufe für den vorhergesagten Schubbetrieb ausgewählt werden. Diese ausgewählte Soll-Gangstufe kann dann über eine geeignete Schnittstelle der Schaltstrategie als entsprechende Schaltaufforderungen bzw. als ein entsprechender Ganghaltewunsch ausgegeben werden.

Ein besonderer Vorzug des erfindungsgemäßen Verfahrens liegt somit darin, dass in Abhängigkeit von Topographiedaten diejenigen Gangstufen als mögliche Kandidaten für einen vorausliegenden Schubbetrieb ermittelt werden, in denen die vom Fahrzeug aufbringbare Gesamtbremskraft für ein verschleißfreies Dauerbremsen immer ausreichend groß ist, um die Hangabtriebskraft ohne Einsatz einer Betriebsbremse kompensieren zu können, um ein unerwünschtes oder zu starkes Beschleunigen des Fahrzeugs zu verhindern.

Gemäß einer bevorzugten Ausführungsform der Erfindung kann die im Schubbetrieb erzeugbare Gesamtkraft, die für jede im Schubbetrieb einlegbare Gangstufe bestimmt wird, in Abhängigkeit von einer oder mehreren der folgenden Größen berechnet werden:

Einer aus dem Motorschleppmoment resultierenden Motorbremskraft, auch als Motorbremse bezeichnet, einer Luftwiderstandskraft des Kraftfahrzeugs, einer Rollwiderstandskraft des Kraftfahrzeugs und/oder einer aus dem Verlustmoment eines Kühlers (z. B. Lüfter) resultierenden Bremskraft. Vorzugsweise werden alle diese Größen additiv zur Bestimmung der im Schubbetrieb erzeugbaren Gesamtbremskraft des Kraftfahrzeugs verwendet. Die aus dem Motorschleppmoment resultierende Motorbremskraft kann ferner weitere Verlustmomente bzw. Verlustkräfte umfassen, die in der Motorreibung enthalten sind, resultierend durch mit dem Motor gekoppelten Nebenaggregate (außer dem bereits erwähnte Kühler), wie beispielsweise die Ölpumpe,

Eine hervorgehobene Anwendung der Erfindung betrifft ein Kraftfahrzeug, das eine Dauerbremse aufweist, mittels derer zusätzlich zu den vorgenannten Bremskräften und insbesondere zusätzlich zum Motorschleppmoment ein Dauerbremsmoment erzeugbar ist. Gemäß dieser Ausführungsform wird die im Schubbetrieb erzeugbare Gesamtbremskraft ferner für jede im Schubbetrieb einlegbare Gangstufe in Abhängigkeit von dem gangabhängigen Dauerbremsmoment der Dauerbremse bestimmt.

Gemäß einer besonders vorteilhaften Variante dieser Ausführungsform ist die Dauerbremse eine primäre Dauerbremse, auch als Primärretarder bezeichnet. Ein Primärretarder wirkt über die Kurbelwelle des Motors, so dass die erzeugte Bremskraft drehzahlabhängig ist. Gemäß dieser Variante wird zur Bestimmung des durch die Dauerbremse erzeugbaren Dauerbremsmoments für jede der möglichen Gangstufen die Motordrehzahl für den Schubbetrieb bestimmt. Durch die Annahme einer gleichbleibenden Geschwindigkeit entsprechend der konstanten Sollgeschwindigkeit kann über die Triebstrangübersetzungsverhältnisse für die verschiedenen möglichen Gangstufen eine Motordrehzahl berechnet werden, welche sich in dieser Gangstufe einstellen würde. Diese Drehzahl wäre dann ebenfalls konstant.

Somit kann nun für jede Gangstufe ein maximal mögliches Dauerbremsmoment über die entsprechenden verfügbaren Kennfelder bestimmt werden. Durch die Triebstrangübersetzungen ergibt sich aus dem maximal möglichen Dauerbremsmoment die maximal mögliche Bremskraft der Dauerbremse für jede mögliche Gangstufe.

Neben der Bremskraft der Dauerbremse, des Motorschleppmoments, der Fahrwiderstandskraft in Form der Luft- und Rollwiderstandskraft und der aus dem Verlustmoment des Kühlers resultierenden Bremskraft können weitere nicht näher spezifizierte Verlustmomente oder Kräfte wirken, die zusätzlich zu der Bremswirkung im Schubbetrieb beitragen. Derartige zusätzliche Verlustmomente bzw. Bremskräfte können experimentell auf einem Prüfstand bestimmt werden und als Größe bei der Bestimmung der Gesamtbremskraft entsprechend zusätzlich berücksichtigt werden.

Gangstufen, deren im Schubbetrieb maximal erzeugbare Bremskraft kleiner als das Maximum des Verlaufs der Hangabtriebskraft während des Schubbetriebs auf dem vorausliegenden Streckenabschnitt ist, können dennoch als geeignete Gangstufen für den Schubbetrieb in Betracht kommen. Dies wäre dann der Fall, wenn ein die Soll-Geschwindigkeit übersteigender Geschwindigkeitsüberschuss des Kraftfahrzeugs aufgrund der zeitweise nicht vollständig kompensierbaren Hangabtriebskraft eine parametrierbare Schwelle nicht überschreitet. Hierzu wird gemäß einer weiteren bevorzugten Ausführungsform des Verfahrens vorgeschlagen, für jede dieser Gangstufen eine durch die Hangabtriebskraft während des Schubbetriebs verursachte Erhöhung der Fahrgeschwindigkeit über die Soll-Geschwindigkeit prädiktiv zu bestimmen. Falls diese bestimmte Geschwindigkeitserhöhung für eine Gangstufe einen ersten Geschwindigkeitsschwellenwert nicht überschreitet und/oder einen zweiten Geschwindigkeitsschwellenwert nur für höchstens eine vorbestimmte Überschreitungszeitdauer überschreitet, dann wird diese Gangstufe ebenfalls zur Vorauswahl möglicher Gangstufen für den Schubbetrieb hinzugefügt. Hierbei kann der erste Geschwindigkeitsschwellenwert gleich dem zweiten Geschwindigkeitsschwellenwert sein.

Diese Ausführungsform bietet den Vorteil, dass höhere Gangstufen, die in der Regel aus Komfortgründen (niedrigere Geräuschbelastung) vorzuziehen sind, aber aufgrund der kleineren Drehzahl eine geringere Dauerbremskraft erzeugen können, unter der Voraussetzung eines ausreichend kleinen Geschwindigkeitsüberschusses für den Schubbetrieb als mögliche Soll-Gangstufe berücksichtigt werden können.

Gemäß einer weiteren bevorzugten Ausführungsform kann beim Schritt des Auswählens einer Gangstufe aus der Vorauswahl möglicher Gangstufen die höchste der Gangstufen der Vorauswahl als Soll-Gangstufe für den vorausliegenden Schubbetrieb ausgewählt werden. Aufgrund der niedrigeren Drehzahl bietet die höchste Gangstufe die geringste Geräuschbelastung und ist damit aus Komfortgründen vorzuziehen.

Es wird jedoch betont, dass gemäß alternativen Ausführungsvarianten auch andere Auswahlkriterien vorgegeben werden können, um eine Gangstufe aus der Vorauswahl auszuwählen. Als mögliche Auswahl- bzw. Ausschlusskriterien von Gangstufen können folgende dienen:

- Drehzahl im Zielgang (parametrierbare Min-/Max-Schwellen dürfen nicht überschritten werden)

- Drehbeschleunigung der relevanten Rotationsmassen im Zielgang (parametrierbare Max-Schwelle darf nicht überschritten werden)

- Geräuschbelastung im Zielgang (parametrierbare Max-Schwelle darf nicht überschritten werden)

- Emissionsbelastung im Zielgang (parametrierbare Max-Schwelle darf nicht überschritten werden)

- Zeitpunkt der letzten Schaltung (parametrierbare Max-Schwelle darf nicht überschritten werden). Wenn z. B. die letzte Schaltung erst vor wenigen Sekunden stattgefunden hat, kann der aktuelle Gang gehalten werden (falls geeignet), obwohl es einen anderen Gang gäbe, der besser geeignet wäre

- Ruck beim Einlegen des Zielganges (parametrierbare Max-Schwelle darf nicht überschritten werden)

Eine weitere Möglichkeit der erfindungsgemäßen Realisierung sieht vor, dass eine Stelle auf dem vorausliegenden Streckenabschnitt, an welcher die ausgewählte Soll-Gangstufe eingelegt oder wieder ausgelegt werden soll, so festgelegt wird, dass sie in einem Bereich des vorausliegenden Streckenabschnitts liegt, in dem eine Beschleunigung des Kraftfahrzeugs während der Schaltphase kleiner als ein vorbestimmter Beschleunigungsschwellenwert ist. Dies bietet den Vorteil, dass der Schaltzeitpunkt nicht auf einen Streckenabschnitt mit sehr starkem Gefälle gelegt wird, um ein unerwünschtes zu starkes Beschleunigen des Fahrzeugs in diesem Abschnitt aufgrund des ausgelegten Gangs zu vermeiden. Zur Bestimmung dieses Bereiches wird vorzugsweise ein Beschleunigungsverlauf prädiktiv berechnet, der sich auf dem vorausliegenden Streckenabschnitt bei ausgelegtem Gang, d. h. wenn kein Antriebsmoment über den Antriebsstrang übertragen wird, ergeben würde. Anhand des so ermittelten Beschleunigungsverlaufs werden diejenigen Bereiche der vorausliegenden Fahrstrecke bestimmt, an denen die vorausberechnete Beschleunigung unter dem vorgegebenen Beschleunigungsschwellenwert liegt. Die möglichen Stellen zum Einlegen und/oder Wiederauslegen der Soll-Gangstufe werden somit gemäß dieser Variante auf diesen Bereich eingeschränkt.

Ferner kann die Stelle zum Einlegen und/oder Wiederauslegen der Soll-Gangstufe so bestimmt werden, dass sie in einem Bereich des vorausliegenden Streckenabschnitts liegt, in dem die Hangabtriebskraft größer als ein gangunabhängiger Anteil der im Schubbetrieb erzeugbaren Bremskraft ist. Dies stellt sicher, dass das Kraftfahrzeug durch den Schaltvorgang nicht abgebremst wird, da während des Schaltvorgangs nur der gangunabhängige Anteil der Bremskraft wirkt.

Ferner kann der Bereich zum Einlegen des Soll-Gangs so festgelegt werden, dass er nicht mehr als ein vorbestimmter Abstand vor einem Beginn einer Gefällestrecke, aufgrund derer der Schubbetrieb gestartet wird, entfernt liegt. Gemäß dieser Variante können frühzeitige Rückschaltungen und damit verbundene Phasen mit hohen Drehzahlen vermieden werden.

Gemäß einem weiteren Gesichtspunkt der Erfindung wird eine Steuervorrichtung eines automatischen bzw. automatisierten Schaltgetriebes bereitgestellt, die eingerichtet ist, das Verfahren zur Beeinflussung einer Getriebeschaltstrategie, wie in diesem Dokument offenbart, auszuführen. Zur Vermeidung von Wiederholungen sollen rein verfahrensgemäß offenbarte Merkmale auch als vorrichtungsgemäß im Zusammenhang mit der Steuervorrichtung offenbart gelten und beanspruchbar sein. Die vorgenannten Aspekte und erfindungsgemäßen Merkmale betreffend die Ausgestaltung des Verfahrens gelten somit auch als funktionale Merkmale einer derartigen Steuervorrichtung. Die Erfindung betrifft ferner ein Kraftfahrzeug, insbesondere ein Nutzfahrzeug, mit einer derartigen Steuervorrichtung.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1          ein Ablaufdiagramm zur Illustration eines Verfahrens gemäß einer Ausführungsform der Erfindung;

Figur 2          einen Verlauf des Höhenprofils und der Hangabtriebskraft, die Gesamtbremskräfte pro Gangstufe und die resultierende Vorauswahl möglicher Gangstufen für den Schubbetrieb;

Figur 3          den prädiktiv bestimmten Verlauf des Höhenprofils, der Hangabtriebskraft und des Geschwindigkeitsverlaufs des Fahrzeugs; und

Figuren 4 und 5   prädiktiv bestimmte Bereiche zum Einlegen und Auslegen der Soll-Gangstufe.

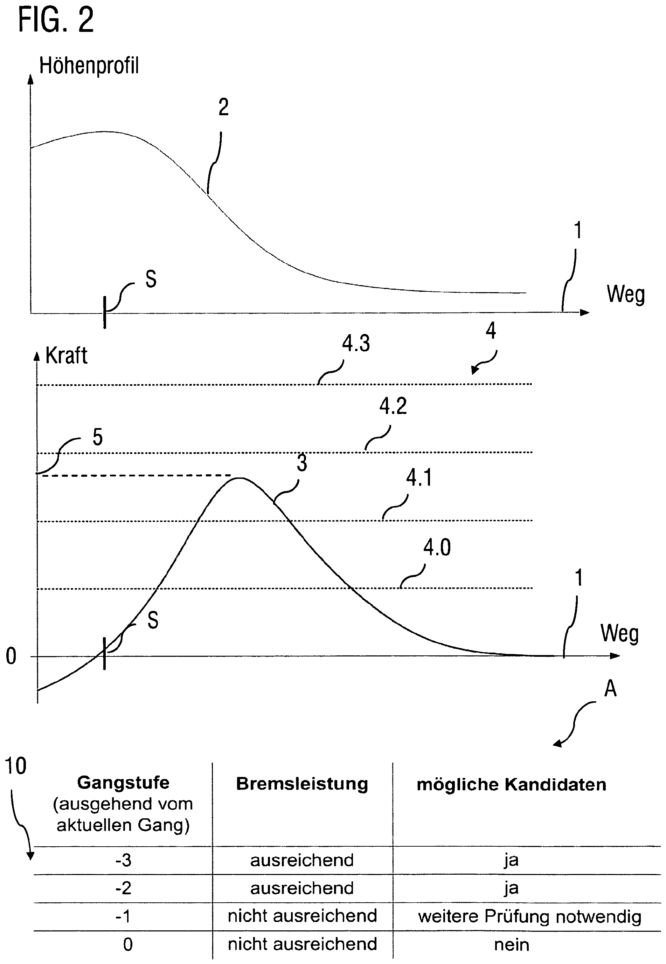

Gleiche oder funktional äquivalente Elemente sind in allen Figuren mit denselben Bezugszeichen bezeichnet.
Gemäß dem nachfolgend beschriebenen Verfahren wird ein Soll-Gang zur Unterstützung der Schaltstrategie im Schubbetrieb prädiktiv bestimmt. Zur prädiktiven Bestimmung wird topographisches Datenmaterial verwendet, welches die Höheninformationen der vorausliegenden Fahrtstrecke, z. B. in Form von Steigungsdaten, hinterlegt hat.
Ziel des nachfolgend beschriebenen Ausführungsbeispiels ist es, das Dauerbremsmanagement, d. h. die Ansteuerung und Regelung der Dauerbremsen, qualitativ zu verbessern, so dass ein höherer Komfort und wirksameres Bremsen erreicht wird. Ein hervorgehobener und nachfolgend beschriebener Anwendungsfall betrifft Fahrzeuge mit starken primären Dauerbremsen, z. B. in Form einer kombinierten Motorstaubremse und Dekompressionsbremse, welche die Eigenschaft haben, dass das maximale Motorbremsmoment abhängig von der Motordrehzahl ist.
Es wird betont, dass die Dauerbremskonfiguration an sich sowie die genaue Strategie des Dauerbremsmanagements keinen direkten Einfluss auf das hier vorgestellte Verfahren haben. Ungeachtet des nachfolgend beschriebenen Ausführungsbeispiels für ein Nutzfahrzeug mit Dauerbremse ist das Verfahren prinzipiell auch bei Fahrzeugen, insbesondere bei Personenkraftwagen (PKWs), möglich, welche keine Dauerbremsen haben. In diesem Fall wird mit dem erfindungsgemäßen Verfahren sichergestellt, dass die Motorreibung möglichst effizient als Bremskraft verwendet wird.

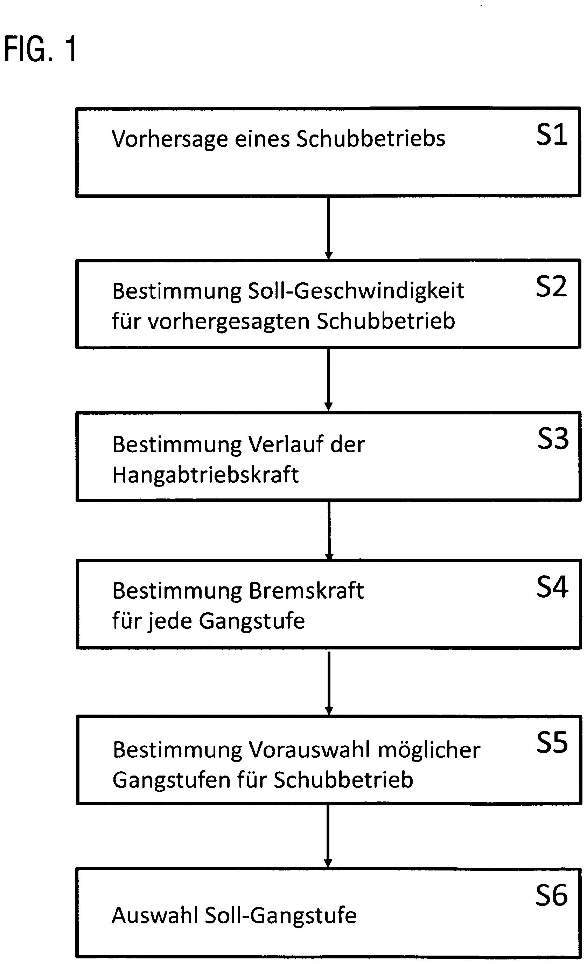

Figur 1 illustriert einen Ablauf der Schritte eines erfindungsgemäßen Verfahrens gemäß einer Ausführungsform der Erfindung.
In Schritt S1 wird zunächst bestimmt, ob auf einem vorausliegenden Streckenabschnitt mit einem Schubbetrieb zu rechnen ist. Die Vorhersage des Schubbetriebs erfolgt anhand von topographischen Kartendaten. Wie vorstehend bereits erwähnt, werden vorausliegende Gefällestrecken bestimmt, an denen ein Schubbetrieb möglich ist. Hierbei kann das Nutzfahrzeug beispielsweise ausgeführt sein, bei Einfahren in eine Gefällestrecke automatisch in einen Schubbetrieb zu wechseln, falls die Gefällestrecke eine vorbestimmte Länge überschreitet und das durchschnittliche Gefälle entlang dieser Gefällestrecke einen Mindestwert überschreitet. Ein Schubbetrieb wird somit vorhergesagt, falls eine vorausliegende Gefällestrecke ermittelt wird, die für einen Schubbetrieb des Kraftfahrzeugs geeignet ist. In Figur 2 ist beispielsweise stark schematisiert ein Höhenprofil 2 einer vorausliegenden Fahrtstrecke 1 des Kraftfahrzeugs dargestellt. Aufgrund der vorausliegenden Gefällestrecke beginnend am Punkt S wird Schubbetrieb vorhergesagt.
In Schritt S2 wird danach eine Soll-Geschwindigkeit $v\_soll$, d. h. eine Wunschgeschwindigkeit für den vorhergesagten Schubbetrieb bzw. für das Durchfahren des vorausliegenden Gefälles, bestimmt. Es wird angenommen, dass diese Wunschgeschwindigkeit während des Schubbetriebs bzw. für das ganze Gefälle konstant bleibt. Dies entspricht allgemein dem typischen Fahrverhalten von LKWs auf Autobahnen. Daher gilt:

$v\_soll = konstant$.

Die Sollbeschleunigung $a\_soll$ des Fahrzeugs ist während des Schubbetriebs folglich gleich null. Bei Lastkraftwagen, die in der Regel über eine Geschwindigkeitsregelanlage (Tempomatfunktion) bzw. eine Bremsgeschwindigkeitsregelanlage (Bremsomatfuntkion) bei Fahrzeugen mit Dauerbremsanlage verfügen, kann diese Soll-Geschwindigkeit für den Schubbetrieb auf die aktuell gültige Soll-Geschwindigkeit der Geschwindigkeitsregelanlage bzw. Bremsgeschwindigkeitsregelanlage eingestellt werden. Im Falle, dass der Fahrer nicht mit der Geschwindigkeitsregelanlage fährt, wird angenommen, dass er die aktuelle Fahrzeuggeschwindigkeit auch im Gefälle konstant halten möchte.
Ferner wird nachfolgend davon ausgegangen, dass die Dauerbremsen die Geschwindigkeit des Fahrzeugs $v\_Fzg$ konstant halten können, so dass angenommen wird: $v\_Fzg = const$.
Diese Annahme kann gemacht werden, da das vorgeschlagene Verfahren dies durch die vorausschauende Bestimmung einer geeigneten Soll-Gangstufe sicherstellt, mit Ausnahme von kurzzeitig tolerierbaren Geschwindigkeitsüberschüssen, die nachfolgend noch erläutert werden. Durch die heutzutage üblich hohe Dauerbremsleistung kann ferner davon ausgegangen werden, dass die physikalischen Grenzen des Dauerbremssystems nicht in dem Gros der Fahrsituationen erreicht werden. Falls es aufgrund sehr starker Gefällestrecken dennoch vorkommen sollte, dass die Dauerbremsleistung in keinem Gang ausreichend sein sollte, was durch die nachfolgend berechneten Größen vorausschauend erkannt wird, kann eine zu definierende Ersatzstrategie greifen, indem beispielsweise dann eine zusätzliche Betätigung der Betriebsbremse vorgenommen wird.

In Schritt S3 wird der Verlauf einer Hangabtriebskraft für die vorausliegende Gefällestrecke bzw. während des Schubbetriebs auf dem vorausliegenden Streckenabschnitt berechnet. Dies ist ebenfalls in Figur 2 illustriert. Das mittlere Diagramm in Figur 2 zeigt korrespondierend zum Höhenprofil 2 des oberen Diagramms den Verlauf der Hangabtriebskraft 3 entlang des vorausliegenden Streckenabschnitts 1. Wie erkennbar ist, erreicht die Hangabtriebskraft 3 mit Beginn der Gefällestrecke 2 einen positiven Wert und steigt nachfolgend mit der zunehmenden Steigung der Gefällestrecke an und erreicht einen Maximalwert 5, bevor sie anschließend wieder zum Ende der Gefällestrecke absinkt. Die Hangabtriebskraft 3 ist hierbei im Gefälle positiv definiert.

In Schritt S4 des Verfahrens wird für jede der für den Schubbetrieb in Frage kommenden Gangstufen die aufbringbare maximale Gesamtbremskraft des Kraftfahrzeugs prädiktiv bestimmt, d. h. im Voraus berechnet. Hier wird die Annahme getroffen, dass sich das Kraftfahrzeug im Schubbetrieb mit der bestimmten Soll-Geschwindigkeit $v\_soll$ bewegen wird, wobei eine durch eine Betriebsbremse erzielbare Bremskraft nicht berücksichtigt wird, so dass als Bremskräfte nur Bremskräfte, die ein verschleißfreies oder im Wesentlichen verschleißfreies Dauerbremsen ermöglichen, berücksichtigt werden. Die maximal aufbringbare Gesamtbremskraft ergibt sich als Summe der nachfolgend erläuterten Bremskräfte:

Für jeden Gang wird eine maximale, von der primären Dauerbremse des Fahrzeugs bestimmbaren Bremskraft erzeugt.

Hierzu wird zunächst für jeden Gang ein maximal mögliches Dauerbremsmoment der primären Dauerbremse bestimmt. Durch die Annahme einer gleichbleibenden Geschwindigkeit während des Schubbetriebs gemäß der Soll-Geschwindigkeit $v\_soll$ kann über die Triebstrangübersetzungsverhältnisse für die verschiedenen möglichen Gänge jeweils eine Motordrehzahl berechnet werden, welche sich in diesem Gang für die vorgegebene Soll-Geschwindigkeit $v\_soll$ einstellen würde. Diese Drehzahl wäre dann ebenfalls konstant. Somit kann daher für jeden Gang ein maximal mögliches Dauerbremsmoment über die entsprechenden im Kraftfahrzeug hinterlegten Kennfelder bestimmt werden. Hierbei ordnet ein Kennfeld einer bestimmten Motordrehzahl in Abhängigkeit von einem bestimmten Gang ein entsprechend maximal mögliches Dauerbremsmoment zu.

Mittels der Triebstrangübersetzungen ergibt sich aus diesem maximal möglichen Dauerbremsmoment für jeden Gang die maximal mögliche Bremskraft der Dauerbremse für jeden Gang, die nachfolgend mit $F\_maxEBtrq(Gang)$ bezeichnet wird.

Der Bremskraftanteil resultierend aus der maximalen Verlustkraft des Kühlers, z. B. in Form des Hauptlüfters, der im Schubbetrieb als Nebenaggregat ebenfalls von der kinetischen Fahrzeugenergie über den geschleppten Motor angetrieben wird, wird zu dem maximal möglichen Dauerbremsmoment hinzuaddiert, da dies ebenfalls zur Verfügung steht. Auch hier kann aus der Soll-Geschwindigkeit $v\_soll$ eine gangabhängige Lüfterdrehzahl und damit ein korrespondierendes Lüfterverlustmoment bestimmt werden. Über die Triebstrangübersetzungen kann aus dem Lüfterverlustmoment die diesem entsprechende und auf das Kraftfahrzeug wirkende Lüfterbremskraft bestimmt werden. Die Lüfterbremskraft wird nachfolgend mit $F\_fan(Gang)$ bezeichnet.

Ferner wird für jeden Gang die Motorreibung berechnet. Es wird im Folgenden davon ausgegangen, dass etwaige Triebstrangverluste (außer dem Hauptlüfter, der zuvor schon separat berechnet wurde) durch weitere Nebenaggregate wie z. B. die Ölpumpe in der Motorreibung enthalten sind. Auch hier kann aus der Soll-Geschwindigkeit $v\_soll$ eine gangabhängige Motordrehzahl im Schleppbetrieb und damit ein korrespondierendes Motorschleppmoment bestimmt werden. Durch die Triebstrangübersetzungen ergibt sich aus dem entsprechenden Motorschleppmoment wiederum die resultierende auf das Kraftfahrzeug wirkende Bremskraft, die nachfolgend mit $F\_fricTrq(Gang)$ bezeichnet wird.

Eine unabhängig vom eingelegten Gang stets vorhandene und auf das Fahrzeug wirkende Bremskraft ist die Fahrwiderstandskraft, basierend auf dem Roll- und Luftwiderstand des Fahrzeugs. Diese Fahrwiderstandskraft ist für eine angenommene konstante Geschwindigkeit während des Schubbetriebs konstant, unabhängig vom aktuellen Gang, und kann in an sich bekannter Weise berechnet werden. Die Fahrwiderstandskraft wird nachfolgend mit $F\_vehRes$ bezeichnet.

Ferner können weitere nicht näher spezifizierte Verlustmomente bzw. Kräfte wirken. Eine entsprechende Komponente, die sich als Differenz der Summe der zuvor beschriebenen Bremskräfte und der tatsächlich gemessenen Gesamtbremskraft ergibt, kann beispielsweise experimentell auf einem Prüfstand oder im Fahrversuch ermittelt und als geschwindigkeitsabhängige und gangstufenabhängige Kennlinie im Kraftfahrzeug hinterlegt werden. Diese Bremskraftkomponente wird mit $F\_auxTrqLoss(Gang)$ bezeichnet.

Somit ergibt sich die für den Schubbetrieb relevante Gesamtbremskraft aus der Summe der vorstehend aufgeführten Bremskräfte unter Annahme einer konstanten Fahrgeschwindigkeit $v\_soll$:

–

$$(Formel\ 1) \qquad F\_maxSumEBtrq(Gang) = F\_maxEBtrq(Gang) + F\_fan(Gang) + F\_fricTrq(Gang) + F\_auxTrqLoss(Gang) + F\_vehRes$$

Die resultierenden Werte für die Gesamtbremskraft *F_maxSumEBtrq(Gang)* sind im mittleren Diagramm der Figur 2 ebenfalls eingezeichnet und durch die mit dem Bezugszeichen 4 gekennzeichneten Linien dargestellt. Hierbei kennzeichnet die horizontale Linie 4.0 die maximale Bremskraft *F_maxSumEBtrq* für den aktuellen Gang (nachfolgend auch als Gangstufe "0" bezeichnet), die Linie 4.1 die maximale Bremskraft *F_maxSumEBtrq* für den aktuellen Gang minus 1 (nachfolgend auch als Gang -1 bezeichnet), d. h., wenn ausgehend vom aktuellen Gang eine Gangstufen zurückgeschaltet würde. Entsprechend kennzeichnet die Linie 4.2 die maximal mögliche Bremskraft *F_maxSumEBtrq* für den aktuellen Gang minus 2 (nachfolgend auch als Gang "-2" bezeichnet) und die Linie 4.3 die maximal mögliche Bremskraft *F_maxSumEBtrq* für den aktuellen Gang minus 3 (nachfolgend auch als Gang "-3" bezeichnet), d. h., wenn ausgehend vom aktuellen Gang drei Gangstufen zurückgeschaltet würde.

In Schritt S5 erfolgt dann die Bestimmung einer Vorauswahl von Gangstufen, wobei aus den grundsätzlich im Schubbetrieb einstellbaren Gangstufen diejenigen ausgewählt werden, deren im Schubbetrieb erzeugbare maximale Bremskraft *F_maxSumEBtrq* größer als das Maximum 5 des bestimmten Verlaufs der Hangabtriebskraft 3 ist.

Aus dem mittleren Diagramm der Figur 2 ist erkennbar, dass dies für die Gangstufen "-3" und "-2" der Fall ist, da die Linien 4.3 und 4.2 stets oberhalb des Maximums 5 der Hangabtriebskraft 3 verlaufen. Mit anderen Worten kann die vom Kraftfahrzeug erzeugbare Gesamtbremskraft für diese Gangstufen stets so groß gewählt werden, dass die Hangabtriebskraft 3 im vorhergesagten Schubbetrieb stets kompensiert und die gewünschte Soll-Geschwindigkeit *v_soll* gehalten werden kann.

Diese ausgewählten Gangstufen werden dann zu einer Vorauswahl in Schritt S5 hinzugefügt. Dies ist ferner anhand der Tabelle im unteren Teil der Figur 2 illustriert. Die linke Spalte 10 gibt die für den Schubbetrieb möglichen Gangstufen an. Folglich sind in der Tabelle die Gangstufen "-3" und "-2" mögliche Kandidaten für einen Schubbetrieb, da die erzeugbare maximale Bremsleistung *F_maxSumEBtrq* in diesen beiden Gangstufen ausreichend ist.

Dagegen ist aus dem mittleren Diagramm der Figur 2 erkennbar, dass bei der aktuellen Gangstufe und bei einem Zurückschalten eines Gangs zu einer niedrigeren Gangstufe ausgehend von der aktuellen Gangstufe die Hangabtriebskraft 3 zumindest in Teilbereichen der Gefällestrecke so groß ist, dass sie nicht von der Maximalbremskraft 4.0 bzw. 4.1 kompensiert werden kann. Für diese Gangstufen wird daher nachfolgend geprüft, ob sie nicht doch als mögliche Soll-Gangstufe in Betracht kommen könnten.

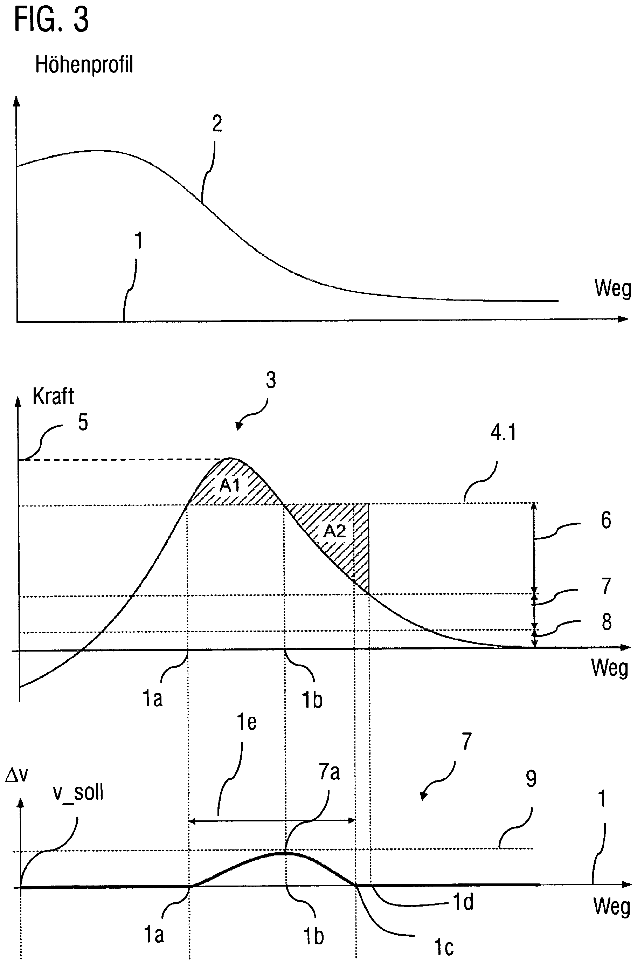

Die hierzu durchgeführten Schritte werden in Zusammenhang mit Figur 3 erläutert.

Das obere Diagramm in Figur 3 gibt wieder den Verlauf des Höhenprofils 2 an. Im mittleren Diagramm der Figur 3 ist durch die Linie 4.1 wiederum die prädiktiv berechnete Gesamtbremskraft für die Gangstufe "-1" gezeigt, die der aktuellen Gangstufe minus 1 entspricht. Diese Gesamtbremskraft setzt sich aus der maximalen Bremskraft der Dauerbremse F_maxEBtrq("-1"), gekennzeichnet mit dem Bezugszeichen 6, der Fahrwiderstandskraft F_vehRes, gekennzeichnet mit dem Bezugszeichen 8, sowie der Summe 7 der restlichen Komponenten der Formel 1, *fan(Gang)* + *F_fricTrq(Gang)* + *F_auxTrqLoss(Gang),* zusammen. Es ist erkennbar, dass in der Gangstufe "-1" die maximal erzeugbare Bremskraft 4.1 gerade nicht mehr ausreicht, den Maximalwert 5 der Hangabtriebskraft 3 zu kompensieren, so dass es aufgrund dessen zu einer Beschleunigung des Kraftfahrzeugs kommen wird, falls kein zusätzlicher Eingriff über die Betriebsbremse vorgenommen wird.

Es wird daher untersucht, ob der im Schubbetrieb durch eine solche Beschleunigung entstehende voraussichtliche Geschwindigkeitsüberschuss $\Delta v$ über die Sollgeschwindigkeit *v_soll* eine parametrierbare Schwelle überschreiten würde, und wenn ja, für wie lange. Hierbei gibt die gemäß Formel 2 berechnete Differenzkraft $\Delta\_F$ diejenige Kraft an, die - wenn positiv - zu einer Beschleunigung des Fahrzeugs gemäß ($a = \Delta\_F/m$) führt, wenn die Gesamtbremskraft für den betrachteten Gang nicht ausreichend ist, um die Hangabtriebskraft zu kompensieren. Die Hangabtriebskraft ist hierbei mit *F_slope* bezeichnet.

$$(Formel\ 2) \qquad \Delta\_F = F\_slope - F\_maxSumEBtrq(Gang) = F\_slope - [F\_maxEBtrq(Gang) + F\_fan(Gang) + F\_fricTrq(Gang) + F\_auxTrqLoss(Gang) + F\_vehRes]$$

Das Integral dieser Beschleunigung über die Wegstrecke 1a bis 1b, entlang derer die Hangabtriebskraft 3 größer als die maximale Bremskraft 4.1 in der jeweiligen Gangstufe ist, ergibt eine Geschwindigkeitsdifferenz $\Delta v$, welche näherungsweise für kleine Differenzen der Geschwindigkeitsüberhöhung entspricht, die durch die nicht ausreichende Gesamtbremskraft erzeugt wird. Für die Gangstufen, deren maximale Bremskraft 4 unterhalb des Maximums der Hangabtriebskraft 3 ist, wird daher diese Geschwindigkeitsdifferenz $\Delta v$ berechnet. Durch das Regelverhalten des Dauerbremsmanagements wird davon ausgegangen, dass nur so weit gebremst wird, dass die Ist-Geschwindigkeit nicht unter die vorgegebene Soll-Geschwindigkeit $v\_soll$ fällt. Die im mittleren Diagramm gekennzeichnete Fläche $A1$ ist somit proportional zur der Größe dieser Geschwindigkeitsdifferenz $\Delta v$, deren prädiktiv berechneter Verlauf im unteren Diagramm der Figur 3 gezeigt ist.

Unter der Annahme, dass im Schubbetrieb mit der Gangstufe "-1" die vorgegebene Soll-Geschwindigkeit $v\_soll$ bis zum Punkt 1a auf der vorausliegenden Fahrtstrecke gehalten werden kann, beträgt der Wert von $\Delta\_v$ bis zum Punkt 1a somit null, da die Hangabtriebskraft immer durch die aufzubringende Gesamtbremskraft kompensiert werden kann. Erst ab dem Punkt 1a übersteigt die Hangabtriebskraft 3 die maximal aufbringbare Gesamtbremskraft 4.1 in der Gangstufe "-1" und führt somit zu einem Anstieg von $\Delta v$ bis zum Erreichen des Punkts 1b, an dem die Hangabtriebskraft 3 wieder unter die in der Gangstufe "-1" aufbringbare Gesamtbremskraft 4.1 fällt.

Folglich erhöht sich der Wert von $\Delta v$ von 1a bis 1b und nimmt anschließend wieder ab. Erst in Punkt 1c erreicht die prädiktiv berechnete Ist-Geschwindigkeit des Fahrzeugs wieder die vorgegebene Soll-Geschwindigkeit $v\_soll$. Ferner ergibt die Vorausberechnung, dass im Punkt 1d die Dauerbremse deaktiviert werden kann, da die Bremskräfte 7 und 8 ausreichend sein werden, die Hangabtriebskraft 3 zu kompensieren.

Im unteren Diagramm der Figur 3 ist ferner ein vorgegebener Geschwindigkeitsschwellenwert 9 eingezeichnet, der im Schubbetrieb nicht überschritten werden soll. Im vorliegenden beispielhaften Fall wird vorausberechnet, dass dieser Schwellenwert 9 in der Gangstufe "-1" nicht überschritten werden wird, da der Peak 7a des Geschwindigkeitsüberschusses $\Delta v$ gerade noch unterhalb dieses Schwellenwerts 9 bleibt. Bleibt der Geschwindigkeitsüberschuss unterhalb des Geschwindigkeitsschwellenwerts 9, ist festgelegt, dass der Geschwindigkeitsüberschuss toleriert werden kann. Folglich wird auch die Gangstufe "-1" zu der Vorauswahl möglicher Gangstufen hinzugefügt.

Alternativ oder zusätzlich zu dem Schwellenwert 9 kann auch vorgegeben werden, dass die Fahrzeuggeschwindigkeit $v\_Fzg$ in einer möglichen Gangstufe nicht länger als eine vorgegebene Maximaldauer über der Sollgeschwindigkeit $v\_soll$ liegen darf. Gemäß dieser Variante wird aus der Wegstrecke 1e, während derer die Geschwindigkeit gemäß Vorhersage über der Sollgeschwindigkeit $v\_soll$ liegt, und der vorausberechneten Geschwindigkeit des Fahrzeugs $v\_Fzg = v\_soll+ \Delta v$ die voraussichtliche Dauer vorausberechnet, während derer die Fahrzeuggeschwindigkeit $v\_Fzg$ über der Sollgeschwindigkeit liegt, und mit der vorgegebenen Maximaldauer verglichen.

Eine analoge Berechnung ergibt für die aktuelle Gangstufe "0", dass der Geschwindigkeitsschwellenwert 9 überschritten wird, so dass diese nicht zu der Vorauswahl möglicher Gangstufen hinzugefügt wird.

Anschließend erfolgt in Schritt S6 die Auswahl einer Gangstufe aus der Vorauswahl möglicher Gangstufen als Soll-Gangstufe für den Schubbetrieb. Die Vorausauswahl umfasst aktuell die Gangstufen "-3", "-2" und "-1", also die drei Gangstufen direkt unterhalb der aktuellen Gangstufe. Vorliegend wird hier die höchste Gangstufe aus den Gangstufen der Vorauswahl als Soll-Gangstufe für den vorausliegenden Streckenabschnitt ausgewählt, somit die Gangstufe "-1".

Nachdem die Entscheidung für den im Schubbetrieb einzulegenden Gang gefallen ist, wird noch ein vorteilhafter Schaltzeitpunkt bestimmt.

Als Auswahlkriterium kann hier die resultierende Beschleunigung des Fahrzeugs während der Schaltphase herangezogen werden. Gemäß dieser Variante sollen nur diejenigen Streckenabschnitte für einen Schaltvorgang in Betracht kommen, die während des Schaltvorgangs nicht zu einer zu starken Beschleunigen des Kraftfahrzeugs führen. Hier ist zu beachten, dass in einer Schaltphase die aufbringbare Gesamtbremskraft aufgrund des unterbrochenen Antriebsstrangs reduziert ist.

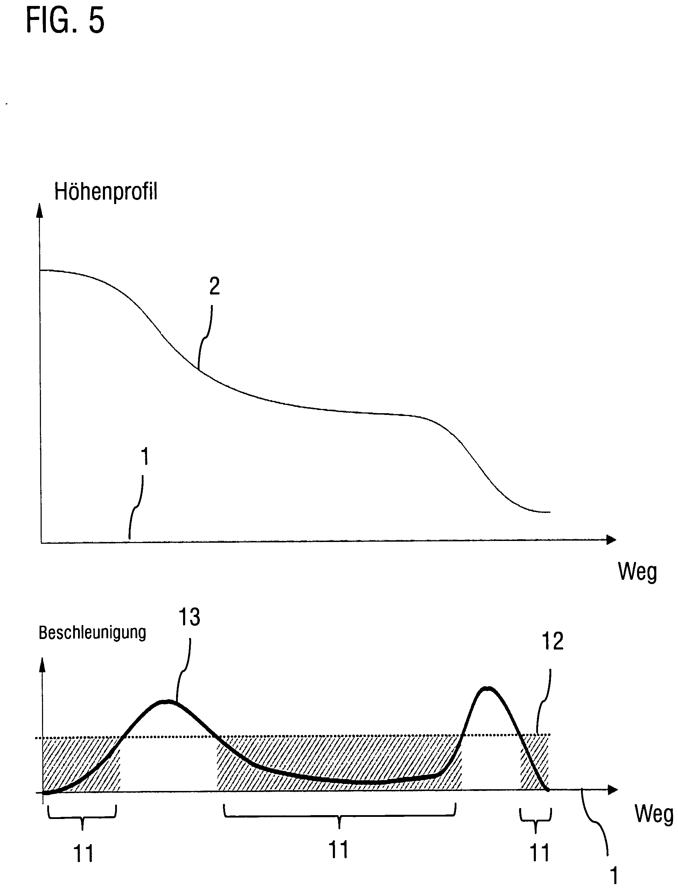

Dies ist beispielsweise in Figur 5 illustriert. Figur 5 zeigt im oberen Diagramm den Verlauf eines Höhenprofils 2 auf der vorausliegenden Wegstrecke. Korrespondierend hierzu wird ein Verlauf 13 einer Fahrzeugbeschleunigung entlang dieses Streckenhorizonts vorausschauend berechnet unter der Annahme, dass sich das Fahrzeug während der ganzen Zeit in einem Schaltzustand befindet, d. h. mit ausgelegtem Gang bewegt, wobei kein Antriebsmoment über den Antriebsstrang übertragen wird. In diesem Zustand wird das Fahrzeug somit nicht durch das Motorschleppmoment oder die Dauerbremse gebremst, sondern im Wesentlichen nur durch den Fahrwiderstand resultierend aus dem Luftwiderstand und dem Rollwiderstand unter der Annahme, dass das Fahrzeug höchstens mit der Wunschgeschwindigkeit plus toleriertem Geschwindigkeitsüberschuss fährt. Es handelt sich hierbei somit um einen fiktiven vorausberechneten Beschleunigungswert, da sich das Kraftfahrzeug natürlich nicht die ganze Zeit in einem Schaltzustand befinden wird. Die Kurve 13 dient lediglich der Bestimmung geeigneter Stellen für einen Schaltvorgang.

Hierzu wird ferner ein Beschleunigungsschwellenwert 12 vorgegeben, der nicht überschritten werden soll. Dieser Beschleunigungsschwellenwert legt eine obere Grenze für das Beschleunigungsverhalten des Fahrzeugs während eines Schaltvorgangs fest. Wie im unteren Diagramm der Figur 5 erkennbar, wird dieser Schwellenwert dann übertroffen, wenn die Gefällestrecke eine besonders hohe Steigung aufweist. Diese Bereiche, an denen die Beschleunigungskurve 13 die Grenze 12 überschreitet, werden somit als mögliche Bereiche zum Einlegen und/oder Wiederauslegen der Soll-Gangstufe ausgeschlossen, so dass nur diejenigen Bereiche 11, bei denen die fiktive Beschleunigung unterhalb des Beschleunigungsschwellenwerts 12 liegt, als mögliche Bereiche für das Schalten in Frage kommen.

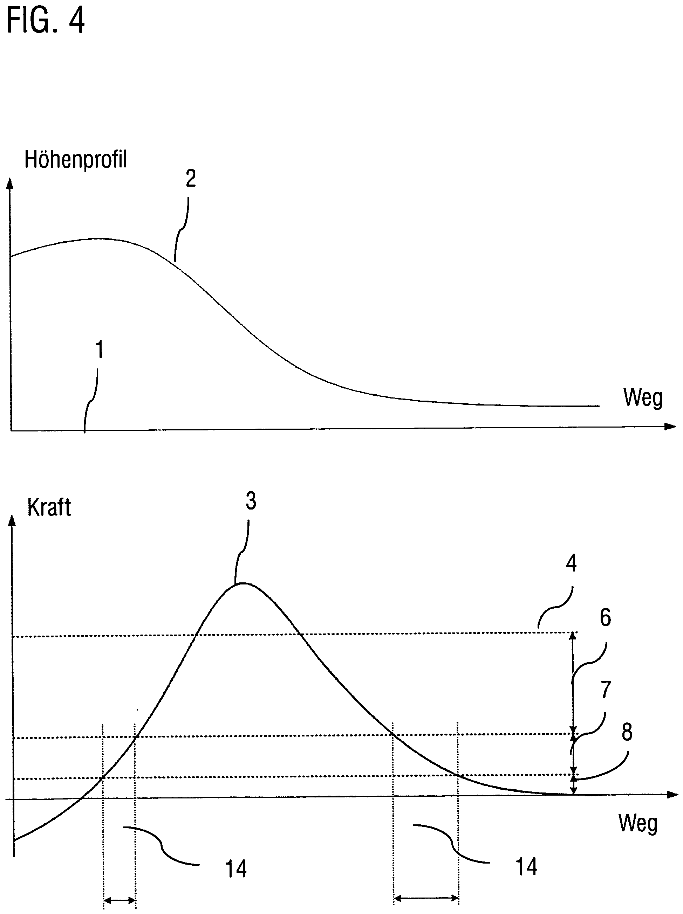

Der geeignete Bereich zum Einlegen und/oder Wiederauslegen der Soll-Gangstufe ist ferner dadurch charakterisiert, dass die Hangabtriebskraft größer ist als die Summe der gangunabhängigen Fahrwiderstandskräfte. Somit würde das Fahrzeug bei offenem Triebstrang, d. h. während der Schaltphase, nicht langsamer werden. Dies ist in den Diagrammen der Figur 4 illustriert. Das obere Diagramm zeigt wieder ein beispielhaftes Höhenprofil 2. Im unteren Diagramm sind wieder für die Gangstufe "-1" der korrespondierende prädiktiv berechnete Verlauf der Hangabtriebskraft 3 und die Größe der maximal erzeugbaren Bremskraft 4.1 dargestellt.

Diese Gesamtbremskraft 4.1 setzt sich aus der maximalen Bremskraft $F\_maxEBtrq("-1")$ der Dauerbremse in der Gangstufe "-1", gekennzeichnet mit dem Bezugszeichen 6, der Fahrwiderstandskraft $F\_vehRes,$ gekennzeichnet mit dem Bezugszeichen 8, sowie der Summe 7 der restlichen Komponenten der Formel 1, $fan(Gang) + F\_fricTrq(Gang) + F\_auxTrqLoss(Gang)$, zusammen.

Mit den Bereichen 14 sind Abschnitte auf dem vorausliegenden Streckenhorizont gekennzeichnet, in dem die Hangabtriebskraft größer als die gangunabhängige Fahrwiderstandskraft 8 ist. Der erste Abschnitt 14 kennzeichnet einen Rückschaltbereich. Hier sollte die Schaltung tendenziell am Beginn dieses Bereichs ausgeführt werden. Der zweite Bereich kennzeichnet einen Hochschaltbereich, in dem die Schaltung tendenziell am Ende dieses Bereiches ausgeführt werden sollte.

Ferner sollte eine Schaltung jedoch erst dann ausgeführt werden, wenn der relevante Gefälleabschnitt, aufgrund dessen die Gangauswahl erfolgt, innerhalb einer parametrierbaren Distanz liegt. Somit sollen frühzeitige Rückschaltungen und damit verbundene Phasen mit hohen Drehzahlen vermieden werden.

Als Entscheidungsgrundlage für die Bestimmung der Stelle auf dem vorausliegendem Streckenhorizont 1, an dem geschaltet wird, wird die Schnittmenge mindestens der vorstehend genannten Bedingungen herangezogen, d. h., alle drei Bedingungen sollten erfüllt sein. Hierbei können ferner noch Unsicherheiten in der Ermittlung der Größen sowie der verwendeten Parameter berücksichtigt werden. Beispielsweise können auf diese Weise Ungenauigkeiten in den Kartendaten, der Positionierung etc. dadurch berücksichtigt werden, dass ein Rückschaltbereich um einen Korrekturfaktor früher durchgeführt wird. Aus der Stelle, an der geschaltet werden soll, kann dann der Schaltzeitpunkt berechnet werden. Nach der Bestimmung des Schaltzeitpunktes wird dann an eine geeignete Schnittstelle der Schaltstrategie die entsprechende Schaltaufforderung mitgeteilt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

**Bezugszeichenliste**

1 Vorausliegender Streckenabschnitt
2 Höhenprofil
3 Hangabtriebskraft
4 Gesamtbremskraft im Schubbetrieb
5 Maximum der Hangabtriebskraft
6 Maximale Bremskraft der Dauerbremse
7 Gesamtbremskraft im Schubbetrieb ohne Bremskraft der Dauerbremse und Fahrwiderstandskraft
8 Fahrwiderstandskraft
9 Geschwindigkeitsschwellenwert
10 Mögliche Gangstufen im Schubbetrieb
11 Beschleunigungsbereich
12 Beschleunigungsschwellenwert
13 Verlauf einer fiktiven Beschleunigung im Schaltvorgang
14 Streckenabschnitte, in denen die Hangabtriebskraft größer als die gangunabhängige Fahrwiderstandskraft ist, aber kleiner als die Gesamtbremskraft ohne Bremskraft der Dauerbremse

**Patentansprüche**

**1.** Verfahren zur Beeinflussung einer Getriebeschaltstrategie eines Kraftfahrzeugs, beispielsweise eines Nutzfahrzeugs, bei dem für eine vorausschauende Fahrstrategie eine Schaltreaktion, insbesondere eine Sollgangstufe, auf einem vorausliegenden Streckenabschnitt in Abhängigkeit von Topographiedaten des vorausliegenden Streckenabschnitts bestimmt wird, umfassend die Schritte:

- Vorhersage eines Schubbetriebs auf einem vorausliegenden Streckenabschnitt in Abhängigkeit von Topographiedaten, insbesondere Steigungs- und Gefälleinformationen, des vorausliegenden Streckenabschnitts (1) (S1);
- Bestimmung einer Soll-Geschwindigkeit für den vorhergesagten Schubbetrieb (S2);
- Prädiktive Bestimmung eines Verlaufs einer während des Schubbetriebs auf das Kraftfahrzeug wirkenden Hangabtriebskraft (3) (S3);
- Für jede im Schubbetrieb einlegbare Gangstufe (10), prädiktive Bestimmung einer vom Kraftfahrzeug im Schubbetrieb erzeugbaren maximalen Gesamtbremskraft (4) unter Annahme, dass sich das Kraftfahrzeug im Schubbetrieb mit der bestimmten Soll-Geschwindigkeit bewegen wird, wobei eine durch eine Betriebsbremse erzielbare Bremskraft nicht berücksichtigt wird (S4);
- Bestimmung einer Vorauswahl (A) möglicher Gangstufen für den vorhergesagten Schubbetrieb, wobei eine Gangstufe, deren im Schubbetrieb erzeugbare maximale Gesamtbremskraft größer als ein Maximum (5) des bestimmten Verlaufs der Hangabtriebskraft (39) ist, zur Vorauswahl hinzugefügt wird (S5);
- Auswählen einer Gangstufe aus der Vorauswahl möglicher Gangstufen als Soll-Gangstufe für den Schubbetrieb (S6).

2. Verfahren nach Anspruch 1, **dadurch gekennzeichnet, dass** die im Schubbetrieb erzeugbare maximale Gesamtbremskraft, die für jede im Schubbetrieb einlegbare Gangstufe prädiktiv bestimmt wird, in Abhängigkeit von

(a) einer aus dem Motorschleppmoment resultierenden Motorbremskraft,
(b) einer Luftwiderstandskraft des Kraftfahrzeugs,
(c) einer Rollwiderstandskraft des Kraftfahrzeugs und/oder
(d) einer aus dem Verlustmoment eines Kühlers resultierenden Bremskraft, bestimmt wird.

3. Verfahren nach Anspruch 1 oder 2, **dadurch gekennzeichnet, dass** das Kraftfahrzeug eine Dauerbremse aufweist, mittels derer zusätzlich zum Motorschleppmoment ein Dauerbremsmoment erzeugbar ist, wobei die im Schubbetrieb erzeugbare maximale Gesamtbremskraft, die für jede im Schubbetrieb einlegbare Gangstufe prädiktiv bestimmt wird, in Abhängigkeit von dem Dauerbremsmoment bestimmt wird.

4. Verfahren nach Anspruch 3, **dadurch gekennzeichnet, dass** die Dauerbremse eine primäre Dauerbremse des Kraftfahrzeugs ist, deren maximales Dauerbremsmoment abhängig von der Motordrehzahl ist, wobei zur Bestimmung des Dauerbremsmoments die Motordrehzahl für den Schubbetrieb für jede der möglichen Gangstufen basierend auf der bestimmten Soll-Geschwindigkeit bestimmt wird.

5. Verfahren nach einem der vorhergehenden Ansprüche, **gekennzeichnet durch** die Schritte,

- Für diejenigen Gangstufen, deren im Schubbetrieb erzeugbare Bremskraft (4) kleiner als das Maximum (5) des Verlaufs der Hangabtriebskraft (3) während des Schubbetrieb auf dem vorausliegenden Streckenabschnitt (1) ist, Bestimmung einer durch die Hangabtriebskraft während des Schubbetriebs verursachten Erhöhung (7a) der Fahrgeschwindigkeit über die Soll-Geschwindigkeit (v_soll); und
- Falls die bestimmte Fahrgeschwindigkeitserhöhung für eine Gangstufe einen ersten Geschwindigkeitsschwellenwert (9) nicht und/oder einen zweiten Geschwindigkeitsschwellenwert nur für höchstens eine vorbestimmte Überschreitungszeitdauer überschreitet, dann Hinzufügen dieser Gangstufe zur Vorauswahl (A) möglicher Gangstufen für den Schubbetrieb.

6. Verfahren nach einem der vorhergehenden Ansprüche, **dadurch gekennzeichnet, dass** beim Schritt des Auswählens einer Gangstufe aus der Vorauswahl (A) möglicher Gangstufen die höchste Gangstufe aus den Gangstufen der Vorauswahl (A) als Soll-Gangstufe für den Schubbetrieb im vorausliegenden Streckenabschnitt ausgewählt wird.

7. Verfahren nach einem der vorhergehenden Ansprüche, **dadurch gekennzeichnet, dass**

(a) eine momentane Ist-Geschwindigkeit des Kraftfahrzeugs oder
(b) eine momentan eingestellte Soll-Geschwindigkeit einer Fahrerwunschgeschwindigkeitsregelung oder einer Bremsgeschwindigkeitsregelung als die Soll-Geschwindigkeit für den vorhergesagten Schubbetrieb festgelegt wird.

8. Verfahren nach einem der vorhergehenden Ansprüche, **dadurch gekennzeichnet, dass** eine Stelle auf dem voraus liegenden Streckenabschnitt, an der die ausgewählte Sollgangstufe eingelegt oder wieder ausgelegt wird, so festgelegt wird,

(a) dass sie in einem Bereich (11) liegt, in dem eine Beschleunigung (3) des Kraftfahrzeugs während der Schaltphase, d. h. bei ausgelegtem Gang, kleiner als ein vorbestimmter Beschleunigungsschwellenwert (12) ist,
(b) dass sie in einem Bereich (14) liegt, in dem die Hangabtriebskraft (3) größer als ein gangunabhängiger Anteil (8) der im Schubbetrieb erzeugbaren Bremskraft (4) ist, und/oder
(c) dass sie in einem Bereich liegt, der nicht mehr als ein vorbestimmter Abstandswert vor einem Beginn einer Gefällestrecke, aufgrund derer der Schubbetrieb gestartet wird, entfernt liegt.

9. Steuervorrichtung eines automatischen bzw. automatisierten Schaltgetriebes, die eingerichtet ist, das Verfahren nach einem der vorhergehenden Ansprüche auszuführen.

10. Kraftfahrzeug, insbesondere Nutzfahrzeug, mit einer Steuervorrichtung nach Anspruch 9.


**Claims**

1. A method for influencing a transmission shift strategy of a motor vehicle, for example of a utility vehicle, in which a shift reaction, in particular a desired gear step, on a route section laying ahead is determined for a predicted driving strategy in accordance with topography data of the route section lying ahead, comprising the steps:

- prediction of an overrun mode on a route section lying ahead in accordance with topography data, in particular positive gradient and negative gradient information, of the route section (1) lying ahead (S1);
- determining a desired speed for the predicted overrun mode (S2);
- predictively determining a progression of a downgrade force (3) acting on the motor vehicle during the overrun mode (S3);
- for each gear step (10) which can be engaged in the overrun mode, predictive determination of a maximum overall braking force (4) which can be generated by the motor vehicle in the overrun mode, with the assumption that the motor vehicle is moved at the determined desired speed in the overrun mode, wherein a braking force which can be achieved by a service brake is not taken into account (S4);
- determining a pre-selection (A) of possible gear steps for the predicted overrun mode, wherein a gear step whose maximum overall braking force which can be generated in the overrun mode is greater than a maximum (5) of the determined progression of the downgrade force (39) is added to the pre-selection (S5);
- selection of a gear step from the pre-selection of possible gear steps as a desired gear step for the overrun mode (S6).

2. The method according to Claim 1, **characterized in that** the maximum overall braking force which can be generated in the overrun mode and which is determined predictively for each gear step which can be engaged in the overrun mode is determined in accordance with

(a) an engine braking force which results from the engine drag torque,
(b) an air resistance force of the motor vehicle,
(c) a rolling resistance force of the motor vehicle, and/or
(d) a braking force which results from the loss torque of a radiator.

3. The method according to Claim 1 or 2, **characterized in that in that** the motor vehicle has a sustained-action brake, by means of which a sustained-action-braking torque can be generated in addition to the engine drag torque, wherein the maximum overall braking force which can be generated in the overrun mode and which is predictively determined for each gear step which can be engaged in the overrun mode is determined in accordance with the sustained-action-braking torque.

4. The method according to Claim 3, **characterized in that in that** the sustained-action brake is a primary sustained-action brake of the motor vehicle, the maximum sustained-action-braking torque of which is dependent on the engine rotational speed, wherein in order to determine the sustained-action-braking torque, the engine rotational speed for the overrun mode is determined for each of the possible gear steps on the basis of the determined desired speed.

5. The method according to one of the preceding claims, **characterized by** the steps:

   - for those gear steps whose braking force (4) which can be generated in the overrun mode is lower than the maximum (5) of the progression of the downgrade force (3) during the overrun mode on the route section (1) lying ahead, determining an increase (7a), caused by the downgrade force during the overrun mode, in the velocity plotted against the desired speed (v_soll); and
   - if the determined increase in velocity for a gear does not exceed a first speed threshold value (9) and/or exceeds a second speed threshold value only for a predetermined excess time period at most, and then adding of this gear speed to the pre-selection (A) of possible gear speeds for the overrun mode.

6. The method according to one of the preceding claims, **characterized in that** during the step of selecting a gear step from the pre-selection (A) of possible gear steps the highest gear step from the gear steps of the pre-selection (A) is selected as the desired gear step for the overrun mode in the route section lying ahead.

7. The method according to one of the preceding claims, **characterized in that**

   (a) a current actual speed of the motor vehicle or
   (b) a currently set desired speed of a driver desired speed controller or a braking speed controller is defined as the desired speed for the predicted overrun mode.

8. The method according to one of the preceding claims, **characterized in that** a point on the route section lying ahead at which the preselected desired gear step is engaged or disengaged again is defined such

   (a) that it lies in a range (11) in which acceleration (3) of the motor vehicle during the gear shift phase, i.e. when a gear is disengaged, is lower than a predetermined acceleration threshold value (12),
   (b) that it lies in a range (14) in which the downgrade force (3) is greater than a gear-independent portion (8) of the braking force (4) which can be generated in the overrun mode,
   and/or
   (c) that it lies in a range which is not more than a predetermined distance value before a start of a downhill section on the basis of which the overrun mode will be started.

9. A control device of an automatic or automated manual gearbox which is configured to carry out the method according to one of the preceding claims.

10. A motor vehicle, in particular utility vehicle, having a control device according to Claim 9.


**Revendications**

1. Procédé destiné à influencer une stratégie de changement de vitesses d'un véhicule automobile, par exemple d'un véhicule utilitaire, dans lequel, pour une stratégie de conduite prédictive, on détermine une réaction de changement de vitesses, en particulier un rapport de changement de vitesses de consigne, sur une portion de route située en avant en fonction de données topographiques de la portion de route située en avant, comprenant les étapes suivantes :

   - prédiction d'un mode de poussée sur une portion de route située en avant en fonction de données topographiques, en particulier en fonction d'informations de montée et de descente, de la portion de route située en avant (1) (S1) ;
   - détermination d'une vitesse de consigne pour le mode de poussée prédit (S2) ;
   - détermination prédictive de la courbe d'une force descensionnelle (3) agissant pendant le mode de poussée sur le véhicule automobile (S3) ;
   - pour chaque rapport de changement de vitesses (10) pouvant être enclenché pendant le mode de poussée, détermination prédictive d'une force de freinage totale maximale (4) pouvant être générée par le véhicule automobile pendant le mode de poussée en supposant que le véhicule automobile est déplacé en mode de poussée avec la vitesse de consigne déterminée, une force de freinage pouvant être obtenue par un frein de service n'étant pas prise en compte (S4) ;

- détermination d'une présélection (A) de rapports de changement de vitesses possibles pour le mode de poussée prédit, un rapport de changement de vitesses dont la force de freinage totale maximale pouvant être générée pendant le mode de poussée est supérieure à un maximum (5) de la courbe déterminée de la force descensionnelle (39), étant ajouté à la présélection (S5) ;
- sélection d'un rapport de changement de vitesses à partir de la présélection de rapports de changement de vitesses possibles en tant que rapport de changement de vitesses de consigne pour le mode de poussée (S6).

**2.** Procédé selon la revendication 1, **caractérisé en ce que** la force de freinage totale maximale pouvant être générée en mode de poussée, qui est déterminée de manière prédictive pour chaque rapport de changement de vitesses pouvant être enclenché en mode de poussée, est déterminée en fonction

(a) d'une force de frein moteur résultant du couple d'inertie du moteur,
(b) d'une force de résistance de l'air du véhicule automobile,
(c) d'une force de résistance au roulement du véhicule automobile, et/ou
(d) d'une force de freinage résultant du couple de perte d'un radiateur.

**3.** Procédé selon la revendication 1 ou 2, **caractérisé en ce que** le véhicule automobile présente un frein permanent au moyen duquel, en plus du couple d'inertie du moteur, un couple de freinage permanent peut être généré, la force de freinage totale maximale pouvant être générée en mode de poussée, qui est déterminée de manière prédictive pour chaque rapport de changement de vitesses pouvant être enclenché en mode de poussée, étant déterminée en fonction du couple de freinage permanent.

**4.** Procédé selon la revendication 3, **caractérisé en ce que** le frein permanent est un frein permanent primaire du véhicule automobile, dont le couple de freinage permanent maximal dépend du régime du moteur, le régime du moteur étant déterminé pour le mode de poussée pour chacun des rapports de changement de vitesses possibles sur la base de la vitesse de consigne déterminée en vue de déterminer le couple de freinage permanent.

**5.** Procédé selon l'une quelconque des revendications précédentes, **caractérisé par** les étapes suivantes :

- pour chacun des rapports de changement de vitesses dont la force de freinage (4) pouvant être générée en mode de poussée est inférieure au maximum (5) de la courbe de la force descensionnelle (3) pendant le mode de poussée sur la portion de route située en avant (1), détermination d'une augmentation (7a), provoquée par la force descensionnelle dans le mode de poussée, de la vitesse de conduite au-delà de la vitesse de consigne (v_soll) ; et
- au cas où l'augmentation de vitesse de conduite déterminée pour un rapport de changement de vitesses ne dépasse pas une première valeur seuil de vitesse (9) et/ou dépasse une deuxième valeur seuil de vitesse tout au plus pour une durée de dépassement prédéterminée, alors ajout de ce rapport de changement de vitesses à la présélection (A) des rapports de changement de vitesses possibles pour le mode de poussée.

**6.** Procédé selon l'une quelconque des revendications précédentes, **caractérisé en ce qu'**à l'étape de sélection d'un rapport de changement de vitesses à partir de la présélection (A) de rapports de changement de vitesses possibles, le rapport de changement de vitesses le plus élevé parmi les rapports de changement de vitesses de la présélection (A) est sélectionné en tant que rapport de changement de vitesses de consigne pour le mode de poussée dans la portion de route située en avant.

**7.** Procédé selon l'une quelconque des revendications précédentes, **caractérisé en ce que**

(a) une vitesse actuelle instantanée du véhicule automobile ou
(b) une vitesse de consigne ajustée de manière instantanée d'une régulation de vitesse souhaitée par le conducteur ou d'une régulation de vitesse de freinage, est établie en tant que vitesse de consigne pour le mode de poussée prédit.

**8.** Procédé selon l'une quelconque des revendications précédentes, **caractérisé en ce qu'**un emplacement sur la portion de route située en avant, au niveau duquel le rapport de changement de vitesses de consigne sélectionné est enclenché ou à nouveau désenclenché, est établi de telle sorte qu'il

(a) soit situé dans une plage (11) dans laquelle une accélération (3) du véhicule automobile pendant la phase de changement de vitesses, c'est-à-dire lorsque le rapport de vitesse est désenclenché, est inférieure à une valeur seuil d'accélération prédéterminée (12),

(b) soit situé dans une plage (14) dans laquelle la force descensionnelle (3) est supérieure à une proportion indépendante du rapport de vitesses (8) de la force de freinage (4) pouvant être générée en mode de poussée, et/ou

(c) soit situé dans une plage qui n'est pas plus éloignée qu'une valeur de distance prédéterminée du début d'une section de descente, sur la base de laquelle le mode de poussée est amorcé.

9. Dispositif de commande d'une boîte de vitesses automatique ou automatisée, qui est prévu pour mettre en œuvre le procédé selon l'une quelconque des revendications précédentes.

10. Véhicule automobile, en particulier véhicule utilitaire, comprenant un dispositif de commande selon la revendication 9.

# FIG. 1

| | |
|---|---|
| Vorhersage eines Schubbetriebs | S1 |

↓

| | |
|---|---|
| Bestimmung Soll-Geschwindigkeit für vorhergesagten Schubbetrieb | S2 |

↓

| | |
|---|---|
| Bestimmung Verlauf der Hangabtriebskraft | S3 |

↓

| | |
|---|---|
| Bestimmung Bremskraft für jede Gangstufe | S4 |

↓

| | |
|---|---|
| Bestimmung Vorauswahl möglicher Gangstufen für Schubbetrieb | S5 |

↓

| | |
|---|---|
| Auswahl Soll-Gangstufe | S6 |

# FIG. 2

Höhenprofil

2

S

1

Weg

Kraft

4.3

4

4.2

5

3

4.1

4.0

1

S

0

Weg

A

| 10 Gangstufe (ausgehend vom aktuellen Gang) | Bremsleistung | mögliche Kandidaten |
|---|---|---|
| -3 | ausreichend | ja |
| -2 | ausreichend | ja |
| -1 | nicht ausreichend | weitere Prüfung notwendig |
| 0 | nicht ausreichend | nein |

# FIG. 3

Höhenprofil

# FIG. 4

Höhenprofil

2

1

Weg

Kraft

3

4

6

7

8

14

14

Weg

# FIG. 5

Höhenprofil

2

1

Weg

Beschleunigung

13

12

11    11    11

Weg

1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006001818 A1
- US 20100030437 A1
- DE 102009002387 A1
- DE 102011080712 A1
- EP 2439428 A1
- DE 102005049710 A1
- DE 102010041324 A1